(19) Europäisches Patentamt / European Patent Office / Office européen des brevets

(11) **EP 4 757 355 A1**

(12) **EUROPEAN PATENT APPLICATION**

(43) Date of publication:
**10.06.2026 Bulletin 2026/24**

(21) Application number: **25217728.2**

(22) Date of filing: **21.11.2025**

(51) International Patent Classification (IPC):
*H04W 4/029* (2018.01)    *H04W 4/33* (2018.01)

(52) Cooperative Patent Classification (CPC):
**H04W 4/029; H04W 4/33**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 IN 202421096368**

(71) Applicant: **Tata Consultancy Services Limited Mumbai, Maharashtra 400 021 (IN)**

(72) Inventors:
• **BHAUMIK, Sumitro**
  **700160 Kolkata (IN)**
• **RATH, Hemant Kumar**
  **751024 Odisha (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR IDENTIFYING MOBILITY TRENDS IN AN INDOOR ENVIRONMENT USING ACCESS POINT DATA**

(57) This disclosure relates generally to a method and system for identification of mobility trends of group of users in an indoor environment. State-of-the-art methods provide capture of localization data of users. However, analysis of collective user data, specifically understanding the mobility of group that reveals macroscopic trends is not yet achieved. The present disclosure addresses these problems through a method of identifying mobility trends among multiple groups of users in real-time using location data of each user within the group. The method involves creating pairs within the group of users based on current location of each user, and a pre-defined threshold value of distance between the current location of paired users. Mobility similarity metric is calculated for each pair of the one or more users. Based on the mobility similarity metric, users are segregated into one or more clusters, each cluster representing a similar mobility trend.

FIG. 2

EP 4 757 355 A1

**Description**

CROSS-REFERENCE TO RELATED APPLICATIONS AND PRIORITY

The present application claims priority from Indian patent application no. 202421096368, filed on December 06, 2024.

TECHNICAL FIELD

The disclosure herein generally relates to identifying mobility trends and, more particularly, to systems and methods for identifying mobility trends in an indoor environment using access point data.

BACKGROUND

Most wireless management platforms keep track of users in the form of connectivity to an Access Point (AP) in a WiFi (Wireless Fidelity) network. In this approach, the platform checks to which AP a user is connected and then it maps the information to a floorplan containing the physical location of the AP. It is a basic approach as it only informs in which broad region (a floor, or a collection of rooms) a user currently is. The solution provided is binary in nature, since the user is either connected or not connected to a certain AP. It's not possible to track their exact position or movement via most such platforms. There are some experimental works which tracks users in an indoor setting using WiFi, but it's done on a per-user basis and is not yet integrated with existing enterprise wireless management platforms. What is most desired nowadays is a platform's ability to track all users and to provide some deeper knowledge behind the mobility of the users. This could aid the organization in understanding several ways users, or any mobile device with WiFi such as robots, move around inside an environment. One example of such deeper knowledge is group-mobility where the platform notifies that a group, which comprises several users, are moving together and are expected to reach a destination in a certain time limit or a group has been static for a long time. Such insights can be beneficial from various angles, such as marketing, law-enforcement, security etc. The mass-scale mobility analysis is desirable on the business side. It includes domains such as security, management, behavioral research, which need to track users in a non-invasive manner. Currently there is a lack of available solutions in the market which can be deployed on the existing infrastructure, which creates a gap in the market.

SUMMARY

Embodiments of the present disclosure present technological improvements as solutions to one or more of the above-mentioned technical problems recognized by the inventors in conventional systems. For example, in one embodiment, a method for identifying mobility trends of group of users in an indoor environment under observation is provided. The method includes identifying one or more existing users connected to one or more access points (APs) in an WiFi environment under observation. The one or more APs are a part of WLAN, and the one or more users present in the environment are detected at one or more APs at one point of time. The method further includes receiving a channel state information (CSI) data and one or more access point (AP) locations for each existing user from the one or more existing users connected to the one or more APs. The CSI data comprises a time stamp, a signal strength, and a unique identifier (MAC ID of the device/user). The method further includes estimating a current location of each of the one or more existing users in the environment under observation. The current location is estimated by processing the CSI data and the one or more AP locations using one or more location estimation models (LEMs). The estimation of the current location of each of the one or more existing users by the one or more LEMs comprises: (a) obtaining the CSI data from the one or more access points (APs) at a pre-determined location in a region, (b) extracting a plurality of received signal strength indicator (RSSI) values from the CSI data, (c) converting the plurality of RSSI values into a plurality of location coordinates based on the pre-determined location of the one or more APs, and (d) pre-processing the plurality of location coordinates by discretizing followed by noise removal to obtain the current location of each of the one or more existing users. The method further includes identifying a plurality of possible pairs of the one or more existing users in the environment under observation based on (a) the current location of each of the one or more existing users, and (b) a pre-defined threshold value of distance between the current location of the one or more existing users. The method further includes calculating a mobility similarity metric of each pair from the plurality of possible pairs of the one or more existing users. The method further includes obtaining a plurality of clusters within the environment under observation by segregating the plurality of possible pairs of the one or more existing users based on (i) the mobility similarity metric of each pair, and (ii) the current location of each pair. The plurality of possible pairs of the one or more existing users forming a cluster represents a similar location coordinate. The method further includes dynamically updating the plurality of clusters upon one or more new user entering the environment under observation. The one or more new user is paired with at least one other user. The at least one other user is one of (a) the one or more existing users, and (b) another new user, and wherein the dynamically updated clusters are segregated based on the mobility similarity metric and the current location. The method further includes analyzing the plurality of dynamically updated clusters with respect to a floor plan of the environment under observation to identify one or more mobility trends of the one or more users within the environment under observation.

In another aspect, a system for identifying mobility trends of group of users in an indoor environment under observation is provided. The system includes at least one memory storing programmed instructions; one or more Input /Output (I/O) interfaces; and one or more hardware processors operatively coupled to a corresponding at least one memory, wherein the system is configured to identify one or more existing users connected to one or more access points (APs) in an environment under observation. The one or more APs are a part of WLAN, and the one or more users present in the environment are detected at one or more APs at one point of time. The system is configured to receive a channel state information (CSI) data and one or more access point (AP) locations for each existing user from the one or more existing users connected to the one or more APs. The CSI data comprises a time stamp, a signal strength, and a unique identifier (MAC ID). The system is configured to estimate a current location of each of the one or more existing users in the environment under observation. The current location is estimated by processing the CSI data and the one or more AP locations using one or more location estimation models (LEMs). The estimation of the current location of each of the one or more existing users by the one or more LEMs comprises: (a) obtaining the CSI data from the one or more access points (APs) at a pre-determined location in a region, (b) extracting a plurality of received signal strength indicator (RSSI) values from the CSI data, (c) converting the plurality of RSSI values into a plurality of location coordinates based on the pre-determined location of the one or more APs, and (d) pre-processing the plurality of location coordinates by discretizing followed by noise removal to obtain the current location of each of the one or more existing users. The system is configured to identify a plurality of possible pairs of the one or more existing users in the environment under observation based on (a) the current location of each of the one or more existing users, and (b) a pre-defined threshold value of distance between the current location of the one or more existing users. The system is configured to calculate a mobility similarity metric of each pair from the plurality of possible pairs of the one or more existing users. The system is configured to obtain a plurality of clusters within the environment under observation by segregating the plurality of possible pairs of the one or more existing users based on (i) the mobility similarity metric of each pair, and (ii) the current location of each pair. The plurality of possible pairs of the one or more existing users forming a cluster represents a similar location coordinate. The system is configured to dynamically update the plurality of clusters upon one or more new user entering the environment under observation. The one or more new user is paired with at least one other user. The at least one other user is one of (a) the one or more existing users, and (b) another new user, and wherein the dynamically updated clusters are segregated based on the mobility similarity metric and the current location. The system is configured to analyze the plurality of dynamically updated clusters with respect to a floor plan of the environment under observation to identify one or more mobility trends of the one or more users within the environment under observation.

In yet another aspect, there are provided one or more non-transitory machine-readable information storage mediums comprising one or more instructions for the selection of an optimal machine learning model for identifying mobility trends of group of users in an indoor environment under observation is provided. The one or more non-transitory machine-readable information storage mediums when executed by the one or more hardware processors cause: receiving identifying one or more existing users connected to one or more access points (APs) in an environment under observation. The one or more APs are a part of WLAN, and the one or more users present in the environment are detected at one or more APs at one point of time. The one or more non-transitory machine-readable information storage mediums when executed by the one or more hardware processors cause: receiving a channel state information (CSI) data and one or more access point (AP) locations for each existing user from the one or more existing users connected to the one or more APs. The CSI data comprises a time stamp, a signal strength, and a unique identifier (MAC ID). The one or more non-transitory machine-readable information storage mediums when executed by the one or more hardware processors cause: estimating a current location of each of the one or more existing users in the environment under observation. The current location is estimated by processing the CSI data and the one or more AP locations using one or more location estimation models (LEMs). The estimation of the current location of each of the one or more existing users by the one or more LEMs comprises: (a) obtaining the CSI data from the one or more access points (APs) at a pre-determined location in a region, (b) extracting a plurality of received signal strength indicator (RSSI) values from the CSI data, (c) converting the plurality of RSSI values into a plurality of location coordinates based on the pre-determined location of the one or more APs, and (d) pre-processing the plurality of location coordinates by discretizing followed by noise removal to obtain the current location of each of the one or more existing users. The one or more non-transitory machine-readable information storage mediums when executed by the one or more hardware processors cause: identifying a plurality of possible pairs of the one or more existing users in the environment under observation based on (a) the current location of each of the one or more existing users, and (b) a pre-defined threshold value of distance between the current location of the one or more existing users. The one or more non-transitory machine-readable information storage mediums when executed by the one or more hardware processors cause: calculating a mobility similarity metric of each pair from the plurality of possible pairs of the one or more existing users. The one or more non-transitory machine-readable information storage mediums when executed by the one or more hardware processors cause: obtaining a plurality of clusters within the environment under observation by segregating the plurality of possible pairs of the one or more existing users based on (i) the mobility similarity metric of each pair, and (ii) the current location of each pair. The plurality of possible pairs of the one or more existing users forming a cluster represents a similar location coordinate. The one or more non-transitory machine-readable information storage mediums when executed by the one or more hardware processors cause: dynamically updating the plurality of clusters upon one or more new user entering the environment under observation. The one or more new user is paired with at least one other user. The at least one other user is one of (a) the one or more existing users, and (b) another new user, and wherein the dynamically updated clusters are segregated based on the mobility similarity metric and the current location. The one or more non-transitory machine-readable information storage mediums when executed by the one or more hardware processors cause: analyzing the plurality of dynamically updated clusters with respect to a floor plan of the environment under observation to identify one or more mobility trends of the one or more users within the environment under observation.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system 100 for mobility trend identification of users in an indoor environment under observation, according to some embodiments of the present disclosure.

FIG. 2 illustrates a flow diagram of mobility trend identification deployed in the indoor environment under observation, according to some embodiments of the present disclosure.

FIGS. 3A, 3B, and 3C depict flow diagrams of an illustrative method for mobility trend identification of users in an indoor environment under observation, using the system of FIG. 1, according to some embodiments of the present disclosure.

FIG. 4 illustrates mobility trend computation in an indoor environment under observation while deployed as an SDN plugin, along with according to some embodiments of the present disclosure.

FIG. 5 illustrates a plurality of mobility trend exhibited by different user, according to some embodiments of the present disclosure.

FIGS. 6A-6E are a graphical illustration of group mobility patterns for a single representative pair of user over an environment R, according to some embodiments of the present disclosure.

FIG. 7 depicts a classification accuracy of different mobility classes, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As used herein the term 'connected users' refers to users who are in range of an access point and can respond to beacon frames. These users are not actively connected to the access point via authentication.

As used herein the term 'access point (AP) location' refers to positional coordinates with reference to the building architectural plan. All access points , before being placed inside an environment, must go through an approval process by the network administrator and the building administrator. The AP location is always known in advance.

As used herein the term 'current location' refers the output of the LEM which computes the location of a user on the basis of their RSSI value with respect to the AP and the location coordinate of the AP itself.

As used herein the term 'similar location coordinate' refers to a proximity threshold for users who are close to each other to constitute as a cluster.

As used herein the term 'MAC ID' refers to a unique device ID which is present in all wireless devices which have Wi-Fi. This ID is used to uniquely identify users inside the environment.

In the present disclosure, a method and a system for mobility trend identification of the group of users is presented. The group of users are connected users, i.e. the users are carrying the mobile phone devices and are identified with one or more access points within the network setup in the indoor environment.

The disclosed system as an indoor location trend analyzer is a software defined networking (SDN) plugin that can be incorporated into the existing network management platforms. The system takes in a channel state information from multiple wireless access points (APs) about all users in the indoor environment and it returns a database of clustered users who are following a certain mobility pattern, which it does by using one or more machine learning techniques. Clustered users are a group of users who have a common movement pattern, users who are moving towards a common destination, etc. As the location trend analyzer gathers more information about the users, it identifies more trends and improves over time.

A sample use case where such group mobility trends/patterns can be exploited is in targeted advertisement, which is a huge industry. Consider the following scenario, say there is a group of users inside a shopping mall waiting for an event to start. Their mobility, which is static at this point, can be understood by a group mobility analyzer. Once this group has been identified, the information can be sent to a marketing agency who can send a targeted advertisement, such as availability of refreshments for exhausted users. The advertisement can be specifically broadcast to the group via the nearest speaker present inside the shopping mall. As it's broadcast to a specific group, it both increases the chance of the product being bought and it avoids broadcasting the advertisement through the whole shopping mall and thus preserving a calm ambience inside the shopping mall. Other examples include understanding of a shopper's behavior where, by analyzing how much time people are spending inside an aisle, a shopper's interest in a product can be deduced. Accordingly, the manager of the store can rearrange the products to maximize engagement with a product. Another use case is in cognitive networks where we can intelligently slice networks or power network devices in an environment based on occupancy or even expected occupancy. This can improve proper network utilization and reduce wastage of electricity, respectively. These are just some of the possibilities of utilizing group mobility in existing industries which can provide valuable insight regarding users without requiring extra infrastructure.

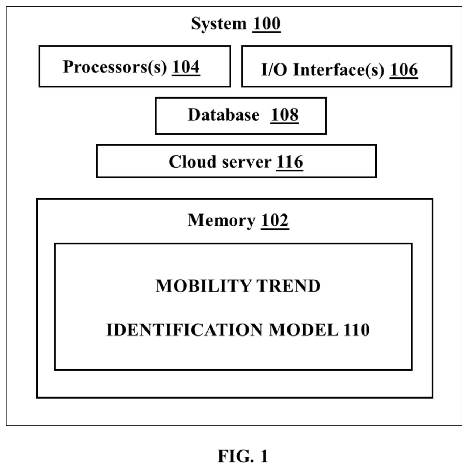

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates an exemplary block diagram of a system 100 for mobility trend identification of users in an indoor environment under observation, according to some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, system 100 can be implemented in a variety of computing systems, such as, laptop computers, notebooks, hand-held devices, workstations, mainframe computers, servers, a network cloud, and the like. The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices such as the user terminals enabling user to communicate with system via the chat bot User Interface (UI) or enabling devices to connect with one another or to another server. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, memory 102 may include a database or repository. Memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. The memory 102 includes the mobility trend identification model 110 that identifies one or more existing users connected to one or more access points (APs) in an environment under observation. The mobility trend identification model 110 collects the CSI data and one or more access point (AP) locations for each existing user from the one or more existing users connected to the one or more APs. The mobility trend identification model 110 utilizes one or more location estimation models (LEMs) to estimate a current location of each of the one or more existing users in the environment under observation by using the CSI data and the one or more AP locations. Based on the current location of each of the one or more existing users, and a pre-defined threshold value of distance between the current location of the one or more existing users, the mobility trend identification model 110 creates a plurality of possible pairs of the one or more existing users. A mobility similarity metric of each pair is calculated and further based on the mobility similarity metric as well as the current location of the users, all the connected users are clustered based on the mobility similarity trend. The memory 102 further includes a plurality of modules (not shown here) comprises programs or coded instructions that supplement applications or functions performed by the system 100 for executing different steps involved in the data rate prediction and prioritization. The plurality of modules, amongst other things, can include routines, programs, objects, components, and data structures, which perform particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by one or more hardware processors 104, or by a combination thereof. The plurality of modules can include various sub-modules (not shown).

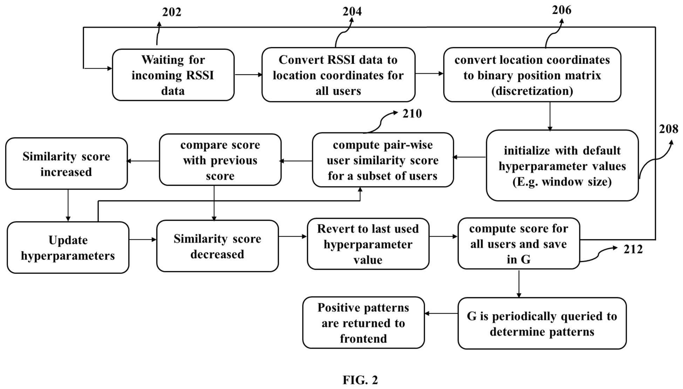

FIG. 2 illustrates a flow diagram of mobility trend identification deployed in the indoor environment under observation, according to some embodiments of the present disclosure.

Referring to FIG. 2, overall framework of the mobility trend identification requires connectivity of a plurality of users present in the environment to the plurality of access points (APs). For each user connected to the one or more APs, the CSI is collected. The location of the one or more APs are pre-determined and are known along with a floor plan of the indoor. At 202, the received signal strength indicator (RSSI) information is extracted from the CSI data. At 204, the RSSI values are converted into one or more location coordinates with reference to the APs existing as per the floor plan using one or more existing Location Estimation Models (LEMs). At 206, the one or more location coordinates are pre-processed and discretized to remove noise. This makes data comprising the one or more location coordinates of the connected users ready to perform mobility trend analysis. At 208, one or more hyperparameters appropriate for the mobility trend analysis are determined. Since the environment the appropriate hyperparameters, such as similarity time window w and distance threshold dt are calculated. A small w and $d_t$ is desirable since having it enables us to capture minor variations in movement patterns. However, making them too small makes the system susceptible to noise. Making w too large improves computation time but we only capture larger movement patterns. So, the initialization begins with a small w and compute S for a subset of users in U. These are typically users which are not "transient", i.e., they have been present in R for a long duration of time. At 210, a pair-wise user similarity score is computed. The pair-wise user similarity score is then compared with the previous pair-wise user similarity score computed using the default hyperparameters. If the pair-wise user similarity score remains the same or has increased, the hyperparameters are updated and similar process is applied again to re-compute the pair-wise user similarity score until the pair-wise user similarity score decreases. A decrease in the pair-wise user similarity score is indicative of losing an ability to capture minor movement patterns. As the pair-wise user similarity score decreases, the system utilizes last set of hyperparameters to compute the pair-wise user similarity score for all the users present in the indoor environment under observation. At 212, once the pair-wise user similarity score is computed for all the possible pairs within the environment under observation, a multidimensional group similarity matrix (G) is formulated. The G stores pairs of users based on similarity within a time duration and with respect to positions in the indoor environment. Once the matrix is ready, it can be queried to retrieve current existing group mobility patterns. The matrix keep updating in real-time upon addition of one or more new users appearing in the indoor environment under observation. The matrix is queried periodically to retrieve mobility trends of the one or more group of users.

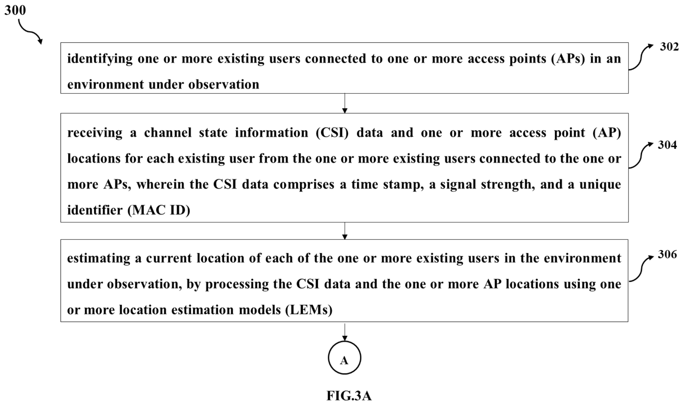

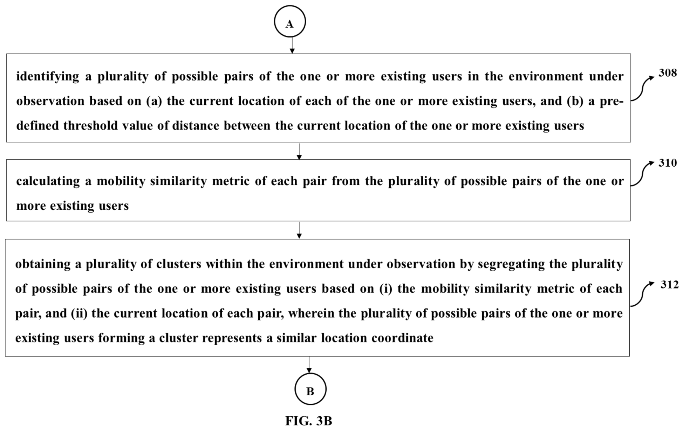

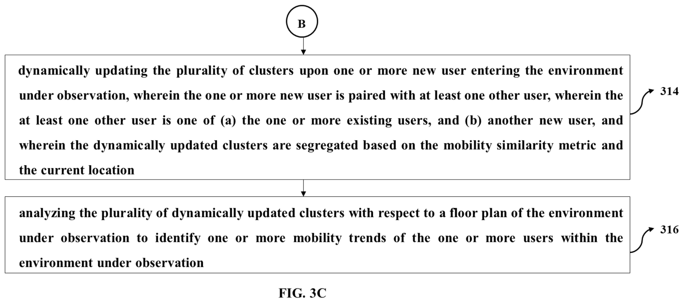

FIGS. 3A, 3B, and 3C depict flow diagrams of an illustrative method for mobility trend identification of users in an indoor environment under observation, using the system of FIG. 1, according to some embodiments of the present disclosure.

The steps of method 300 of the present disclosure will now be explained with reference to the components or blocks of the system 100 as depicted in FIG. 1 through FIG. 7. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, the one or more hardware processors 104 are configured to identify one or more existing users connected to one or more access points (APs) in an environment under observation. Let there be an environment under observation, R which is to be monitored for a set of existing users U. The R comprises a plurality of access points placed at a pre-determined locations based on an existing wireless network infrastructure of the environment under observation. Such infrastructure usually has a collection of access points (APs) which are connected to a WLAN controller, which in turn are connected to a Centralized Network Controller (CNC). The one or more existing users represents connected users as, at any point of time, each user within the environment under observation is connected to at least one access point (AP). If the existing user is mobile, then it may disconnect from the at least one AP connected earlier, and may appear on another AP. Therefore, as long as the user is present in the environment under observation, it is found to be connected to at least one AP. The APs collect CSI data for each user which is saved at a centralized database. For legacy infrastructure, the controller is vendor specific, and for modern infrastructure, it is a software defined network controller.

At step 304 of the method 300, the one or more hardware processors 104 are configured to receive, via the one or more hardware processors, a channel state information (CSI) data and one or more access point (AP) locations for each existing user from the one or more existing users connected to the one or more APs, wherein the CSI data comprises a time stamp, a signal strength, and a unique identifier (MAC ID). The CSI data represents channel properties of a communication link. The CSI data describes how a signal propagates from the transmitter to the receiver and represents the combined effect of, for example, scattering, fading, and power decay with distance. The existing users ($u_1, .....u_4$) connect to the one or more APs their wireless device, and every connected device is uniquely identifiable via a device ID, such as Media Access Control ID (MAC ID).

At step 306 of the method 300, the one or more hardware processors 104 are configured to estimate a current location of each of the one or more existing users in the environment under observation, by processing the CSI data and the one or more AP locations using one or more location estimation models (LEMs). These LEMs are established models from the existing literature which give a location estimate which vary slightly compared to the ground-truth. The system continuously collects the CSI data from the one or more APs, and the one or more LEM computes the current location of each of the one or more existing users in the environment under observation. According to an embodiment, the one or more LEMs with a varying accuracy level are used to estimate the current location of each user. The one or more LEMs includes an are indoor localization using random forests machine learning technique, localization using hybrid signal fingerprints, and trilateration-based indoor localization for enterprise networks. position of $u_i$ inside a reference frame. In an embodiment, the trilateration-based indoor localization LEM is utilized to estimate the current location of each user. The R is splitted into a grid of size p x q. Each cell inside the grid is a location and has given a unique identifier ($x_i, y_i$). Each user $u_i$ of the set U has its own mobility path, or trajectory, which is represented as a timeseries $M_i$ where each entry is of the format ($t_i$ $x_i$ $y_i$). The one of more LEMs takes in a set of trajectory matrices M for the existing users in U as input and returns the position of $u_i$ inside a reference frame.

At step 308 of the method 300, the one or more hardware processors 104 are configured to identify a plurality of possible pairs of the one or more existing users in the environment under observation based on (a) the current location of each of the one or more existing users, and (b) a pre-defined threshold value of distance between the current location of the one or more existing users. The plurality of possible pairs of the one or more existing users in the environment under observation is based on similarity of paths taken by each user in the pair. The pre-defined threshold value of distance between the current location of the one or more existing users is customizable and based on the pre-defined threshold value the one or more users are paired. The users falling far from the pre-defined threshold are not considered for pairing regardless of connecting to the same AP.

At step 310 of the method 300, the one or more hardware processors 104 are configured to calculate a mobility similarity metric of each pair from the plurality of possible pairs of the one or more existing users. The measure of similarity of the path taken by two users is a cumulative distance between them within a time interval. Thus, the similarity score S between users $u_i$ and $u_j$ within a time window w from time instance $t_k$ is computed as equation (1):

$$S = \frac{\sum_{k}^{k+w} D(P(u_i, \ t_l), P\ (u_j, t_l)}{w} \tag{1}$$

Where, a function D computes an euclidean distance between two positions and a function P returns position of a user for a given time instant. To prevent, the similarity score getting affected from a duration upto which both paired users travel together, the similarity score is normalized using a standard min-max feature scaling, and the normalized similarity score $S_n$ is represented in equation (2) as:

$$S_n = \frac{S - S_{min}}{S_{max} - S_{min}} \tag{2}$$

While setting $S_{max}$ to the maximum environment size, most consistent results are retrieved. However, S is calculated only between users which are in the same vicinity and not between all users in the environment, determined by a distance threshold $d_t$. This hyperparameter is mainly dependent on the size of the environment and the overall freedom of mobility within that environment.

At step 312 of the method 300, the one or more hardware processors 104 are configured to obtain a plurality of clusters within the environment under observation by segregating the plurality of possible pairs of the one or more existing users based on (i) the mobility similarity metric of each pair, and (ii) the current location of each pair, wherein the plurality of possible pairs of the one or more existing users forming a cluster represents a similar location coordinate. The plurality of possible pairs of the one or more existing users in the indoor environment under observation are clustered based on the mobility similarity metric of each pair of the plurality of possible pairs. While clustering the pairs, the current location of each pair is also considered. The one or more pairs can have identical or closer mobility similarity metric, but the one or more pairs could be located far off from other pair. Therefore, clustering considers both the aspects of the mobility similarity metric of each pair as well as current location of each pair. The one or more clusters generated based on the mobility trends as output, returns the position of $u_i$ inside a reference frame. Once the reference frame is obtained, a mobility similarity score calculation is performed for every pair of users to compute the mobility similarity score between all the existing users in U. Based on the mobility similarity score all users are segregated into different clusters, where each cluster has a distinct mobility pattern.

At step 314 of the method 300, the one or more hardware processors 104 are configured to dynamically update the plurality of clusters upon one or more new user entering the environment under observation, wherein the one or more new user is paired with at least one other user, wherein the at least one other user is one of (a) the one or more existing users, and (b) another new user, and wherein the dynamically updated clusters are segregated based on the mobility similarity metric and the current location. The method considers the dynamics involved with the indoor environment under observation as one or more new users can add to the environment under observation. The added new user is paired with either with another new user entering the environment under observation, or with the existing user in the closest proximity. The mobility similarity metric is calculated for the pair comprising the new user. And based on the mobility similarity metric as well as a current location of the new user is combined to cluster the new user into one of the one or more clusters.

At step 316 of the method 300, the one or more hardware processors 104 are configured to analyze the plurality of dynamically updated clusters with respect to a floor plan of the environment under observation to identify one or more mobility trends of the one or more users within the environment under observation. The plurality of dynamically updated clusters are analysed to identify the one or more mobility trends of the group of users. The mobility trends of the group of users can further assist in analyzing group/crowd behavior.

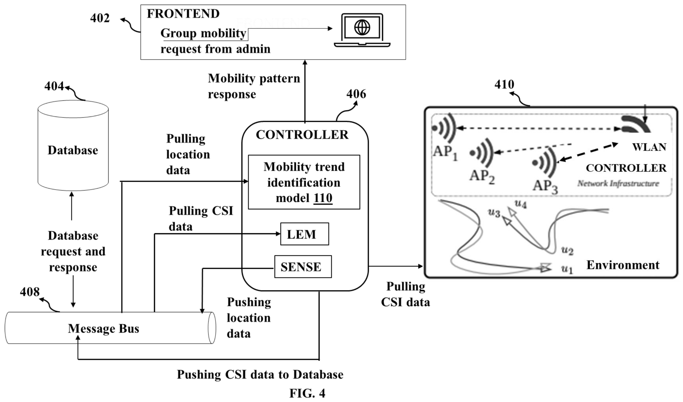

FIG. 4 illustrates mobility trend computation in an indoor environment under observation while deployed as an SDN plugin, along with according to some embodiments of the present disclosure.

The system 100 for mobility trend computation as a mobility trend analyzer works as the SDN plugin and is installed on a network with minimal interference to the existing infrastructure. However, the system 100 for mobility trend computation as a mobility trend analyzer can also work in one or more non-SDN network management platforms as well. As illustrated in FIG. 4, a front-end 402 of the system 100 presents allows an admin, or the person who owns the system to view all users and to analyse which mobility class they belong to. The admin can also query the system 100 via the frontend and ask if a certain mobility class exists. E.g. a crowd of group size = 20 exists or not. A database 404 comprises a plurality of details about the one or more users connected to the one or more APs in the environment. The database saves all collected raw data from the APs and the final processed mobility patterns. A controller 406 collects the CSI data from the environment and computes the mobility patterns of the users. The Message bus 408 connects all the components of the mobility trend identification model 110 where the data is sent as per a push/pull model. A network infrastructure 410 in the environment under observation owns collection of networking apparatus, such as networking switches, routers, access points, etc. The mobility trend identification model 110 uses the infrastructure 410 to collect data from the environment in which multiple users are moving. Deployment of the mobility trend analyzer of system 100 in an existing wireless network infrastructure utilizes a plurality of access points (APs). The APs are connected to a WLAN controller, which in turn are connected to a centralized network controller (CNC). Let the environment under observation has users ($u_1, ...., u_4$) connected to the APs via their wireless device, and every connected device is uniquely identifiable via a device ID, such as Media Access Control ID (MAC ID). The APs collect the CSI for each user which is saved at a centralized database. For legacy infrastructure, the controller can be vendor specific, and for modern infrastructure, it can be software defined network controller. In both the cases, the controllers takes input custom network scripts, or modules, which can enhance network operations. For example, ArubaOS provides a list of REST APIs which are used to fetch various CSI parameters on a per-device level. The REST query is sent to the network controller, which in turn probes the APs and the collated data is sent to the user or application requesting it. The mobility trend identification model 110 utilizes these APIs to fetch received signal strength indicator (RSSI) and device MAC ID via a GET query. The system 100 is provided as a network module which needs to be installed on the network controller. The module takes in as input the constant stream of raw CSI data from the database. The format of the CSI data must be provided by the admin in advance for the system 100 to function. The system 100 also needs another network module known as Location Estimation Model (LEM) for proper functionality, which is provided alongside. A LEM takes in input various CSI about users and returns an estimated location of each user inside a reference frame. The LEM takes in the raw CSI collected by WLAN controller and converts it into coordinates for each user, after a data pre-processing phase. There are various existing LEMs in the literature which can be executed on the CNC. The LEM continuously runs and computes the location for all users. The system 100 takes the location data from the LEM as input and generates mobility patterns for all users present in the environment under observation.

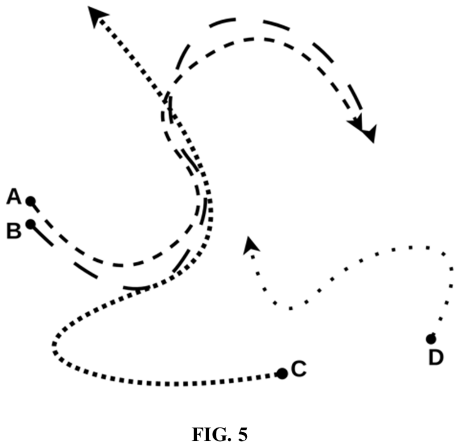

FIG. 5 illustrates a plurality of mobility trend exhibited by different user, according to some embodiments of the present disclosure.

As illustrated in FIG. 5, users A and B have similar mobility patterns throughout their entire movement duration. Users A and C have a similar pattern but only for a short window. User D's mobility pattern is dissimilar with all other users. Each mobility pattern reflects a certain type of human behavior which needs to be manually tagged to an intention. The intention is referred as a human-readable version of a trajectory, e.g., a trajectory might show that the three users A, B, and C are simply going together from a tagged location $L_p$ to $L_q$, but when paired with the context such as timing and the floor plan, it is understood that the users A, B, and C are going together from their cubicles to the cafeteria. A unique trajectory intention contains a SOURCE and DESTINATION. Each mobility pattern must be tagged to an existing intention, or a new intention must be created by a domain expert. An incoming mobility trend is clustered to existing intentions if they are found to be similar, or they will be tagged as "UNKNOWN" and added to a knowledge base of mobility intentions. The domain expert will manually tag them over time. Using a web frontend, a dashboard is presented to the admin who can see a list of intentions, the list of users mapped to each intention, and the occurrence time of each event. This presents a complete mobility history of all users.

According to an embodiment, the system 100 also comprises of a querying system where the client can send targeted queries. E.g. a query "users who are going to the cafeteria from time 11:00 AM to 11:30 AM". The database supported by the mobility trend identification model 110 return all having "cafeteria" as *DESTINATION* and the event occurred within the specified time range.

According to an embodiment, the system 100 sends periodic queries to understand the status of users. E.g. the query "users of group size of 20" will notify the client or building administrator whenever a group size of 20 is detected along with the location of where the group has been detected, which might be unusual for the organization.

MOBILITY SIMULATION STUDY

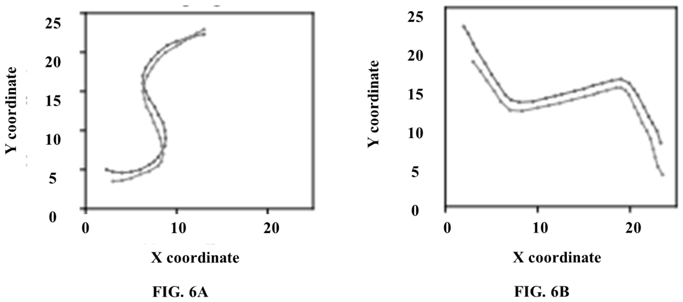

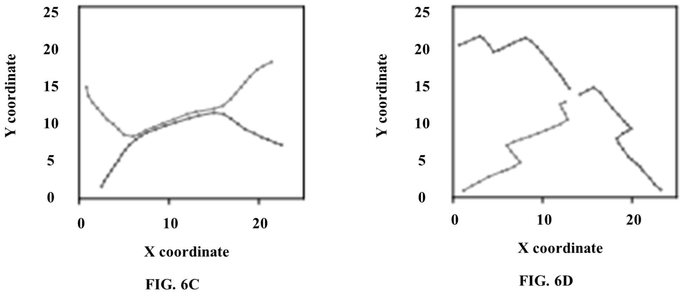

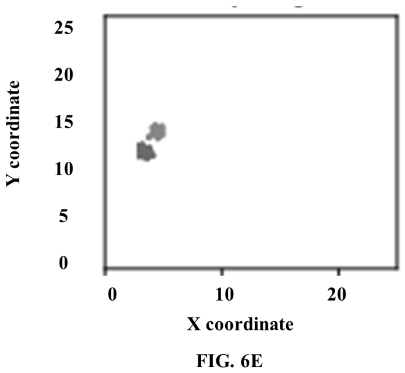

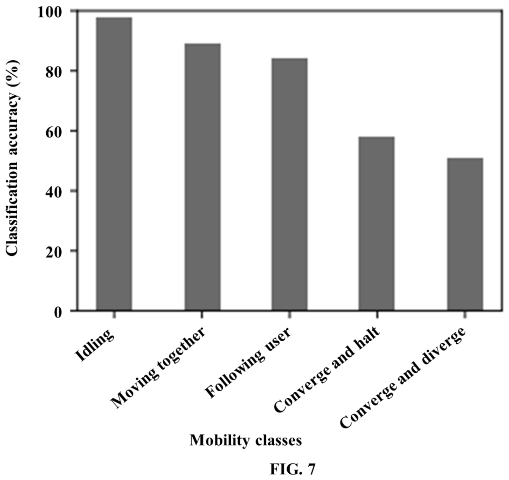

While performing simulation study, mobility data is generated by manually trace a plurality of movements over a virtual environment. Mobility simulation is performed as there exist no publicly available datasets of human mobility along with the corresponding ground truth. While simulating, naive path equations are avoided as they do not capture the inherent randomness of human mobility and interactions with environmental obstacles. The manual tracing of movements over a virtual environment served as ground truth. The captured mobility is collected by APs and by using the LEMs. Since the accuracy of LEMs is highly dependent on environment type and condition, a small amount of error between the ground truth and the estimation location is factored. We have a various mobility patterns to simulate diversity in human mobility tagged as different classes of group mobility, or intentions. Examples of such diversity is shown in FIGS. 6A-6E. FIG. 6A represents the users who are moving together in close proximity to each other (together). FIG. 6B represents the users moving together only for a short duration and then diverging (converging & diverging). FIG. 6C represents the users moving together but maintaining an observable distance between them (leader-follower). FIG. 6D represents users who are converging to a common point (converging & halting). And FIG. 6E represents the users idling at a common point (idling). This diversity of mobility patterns can be checked using the mobility identification model 110 that returns a different score for each pattern at different time intervals. The various classes as shown in FIGS. 6A-6E are differentiated based on the following three features: (i) absolute value of $S_n$, (ii) variance of $S_n$, and (iii) average velocity of user. The experimental scenario: The users, or groups of users, each having a wireless device which is connected to one or more APs inside the environment whose positions are known beforehand. The APs gather the CSI data from each user and estimate the location using standard LEMs. The group mobility patterns is further computed. The experiment is repeated with multiple types of mobility patterns for different users, and environments such as indoor and outdoor environments. Indoor environments include office spaces, classrooms, shopping malls, warehouses etc. Outdoor environments include parking spaces, recreational parks, stadiums etc. FIG. 7 shows the overall classification accuracy of the different mobility types. Users moving together have a consistent low $S_n$ score (lower $S_n$ value indicates a higher likelihood that the users have similar mobility and vice versa) and a low variance. This is logical as they maintain a consistent trajectory throughout a certain interval. Users in the leader-follow class, have a higher $S_n$ compared to together class but comparatively low. For certain instances of leader-follower class, higher $S_n$ score is seen in some intervals. This happened when the leader among the follower class made a turn in a hallway, but the follower is still following the past trajectory of the leader. However, this class frequently overlaps with together class since users do not maintain a consistent velocity always and the followers catch up with the leader which causes the classes to become non-distinct sometimes. Users in converging & diverging class had a remarkably high variance in $S_n$ score and are thus hardest to identify because of how convergence and divergence takes place. Some users converge and stay together for an extended period of time and gets misclassified with together class before suddenly diverging. Another cause for high variance in score is because the angle between the convergence and divergence vectors varies between different users. This form of mobility usually occurs maximally in corridors since it is a common passage point. The class converging & halting is closely related to the previous class, but it is linked to the other classes as well. This class is detected when the users are usually converging to an event. However, because the individual users can be moving together, they are often classified as one of the previous classes. This unique mobility is detected only when we observed the same data with a larger window size w. The final class is idling which has the most common activity since users inside an office are mostly not moving when they are at their workspace. A minor variance in the position attributed to noise, or the user moving around in their workspace have been observed.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein addresses unresolved problem of identifying mobility trends of group of users in the indoor environment under observation. The method involves creating pairs within the group of users based on current location of each user, and a pre-defined threshold value of distance between the current location of paired users. The current location of each of the one or more existing users in the environment under observation is estimated using one or more location estimation models (LEMs) that utilizes the CSI data and the one or more AP locations in the indoor environment. A mobility similarity metric of each pair from the plurality of possible pairs of the one or more existing users is calculated. Based on the mobility similarity metric, users are segregated into one or more clusters, each cluster representing a similar mobility trend. The clusters are dynamically updated upon one or more new user entering the environment under observation, wherein the one or more new user. The new entering user is either paired with at least one other user, wherein the at least one other user is one of (a) the one or more existing users, and (b) another new user. Therefore the present disclosure effectively perform real-time mobility trend analysis of dynamically updated clusters in the indoor environment under observation.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (300), comprising steps:

identifying (302), via one or more hardware processors, one or more existing users connected to one or more access points (APs) in an environment under observation;

receiving (304), via the one or more hardware processors, a channel state information (CSI) data and one or more access point (AP) locations for each existing user from the one or more existing users connected to the one or more APs, wherein the CSI data comprises a time stamp, a signal strength, and a unique identifier (MacID);

estimating (306), via the one or more hardware processors, a current location of each of the one or more existing users in the environment under observation, by processing the CSI data and the one or more AP locations using one or more location estimation models (LEMs);

identifying (308), via the one or more hardware processors, a plurality of possible pairs of the one or more existing users in the environment under observation based on (a) the current location of each of the one or more existing users, and (b) a pre-defined threshold value of distance between the current location of the one or more existing users;

calculating (310), via the one or more hardware processors, a mobility similarity metric of each pair from the plurality of possible pairs of the one or more existing users;

obtaining (312), via the one or more hardware processors, a plurality of clusters within the environment under observation by segregating the plurality of possible pairs of the one or more existing users based on (i) the mobility similarity metric of each pair, and (ii) the current location of each pair, wherein the plurality of possible pairs of the one or more existing users forming a cluster represents a similar location coordinate;

dynamically updating (314), via the one or more hardware processors, the plurality of clusters upon one or more new user entering the environment under observation, wherein the one or more new user is paired with at least one other user, wherein the at least one other user is one of (a) the one or more existing users, and (b) another new user, and wherein the dynamically updated clusters are segregated based on the mobility similarity metric and the current location; and

analyzing (316), via the one or more hardware processors, the plurality of dynamically updated clusters with respect to a floor plan of the environment under observation to identify one or more mobility trends of the one or more users within the environment under observation.

2. The processor implemented method as claimed in claim 1, wherein the one or more mobility trends are identified by a software defined networking (SDN) plugin that is incorporated into one or more existing network management platforms that supports the SDN plugin, and one or more non-SDN network management platforms.

3. The processor implemented method as claimed in claim 1, wherein the mobility similarity is a normalized value of a cumulative distance between two users in the environment under observation within a pre-defined time window, and wherein the mobility similarity is calculated as:

$$S_n = \frac{S - S_{min}}{S_{max} - S_{min}}$$

Where,

$$S = \frac{\sum_k^{k+w} D(P(u_i, \ t_l), P\ (u_j, t_l)}{w}$$

where S represents mobility similarity score between users $u_i$ and $u_j$ within a time window w from time instance $t_k$, function D computes the Euclidean distance between two positions, and function P returns the position of a user for a given time instant.

4. The processor implemented method as claimed in claim 1, wherein estimating the current location of each of the one or more existing users by the one or more LEMs comprises:

obtaining the CSI data from the one or more access points (APs) at a pre-determined location in a region;

extracting a plurality of received signal strength indicator (RSSI) values from the CSI data;

converting the plurality of RSSI values into a plurality of location coordinates based on the pre-determined location of the one or more APs; and pre-processing the plurality of location coordinates by discretizing followed by noise removal to obtain the current location of each of the one or more existing users.

5. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

identify one or more existing users connected to one or more access points (APs) in an environment under observation;

receive a channel state information (CSI) data and one or more access point (AP) locations for each existing user from the one or more existing users connected to the one or more APs, wherein the CSI data comprises a time stamp, a signal strength, and a unique identifier (MacID);

estimate a current location of each of the one or more existing users in the environment under observation, by processing the CSI data and the one or more AP locations using one or more location estimation models (LEMs);

identify a plurality of possible pairs of the one or more existing users in the environment under observation based on (a) the current location of each of the one or more existing users, and (b) a pre-defined threshold value of distance between the current location of the one or more existing users;

calculate a mobility similarity metric of each pair from the plurality of possible pairs of the one or more existing users;

obtain a plurality of clusters within the environment under observation by segregating the plurality of possible pairs of the one or more existing users based on (i) the mobility similarity metric of each pair, and (ii) the current location of each pair, wherein the plurality of possible pairs of the one or more existing users forming a cluster represents a similar location coordinate;

dynamically update the plurality of clusters upon one or more new user entering the environment under observation, wherein the one or more new user is paired with at least one other user, wherein the at least one other user is one of (a) the one or more existing users, and (b) another new user, and wherein the dynamically updated clusters are segregated based on the mobility similarity metric and the current location; and

analyze the plurality of dynamically updated clusters with respect to a floor plan of the environment under observation to identify one or more mobility trends of the one or more users within the environment under observation.

6. The system as claimed in claim 5, wherein the one or more mobility trends are identified by a software defined networking (SDN) plugin that is incorporated into one or more existing network management platforms that supports the SDN plugin, and one or more non-SDN network management platforms.

7. The system as claimed in claim 5, wherein the mobility similarity is a normalized value of a cumulative distance between two users in the environment under observation within a pre-defined time window, and wherein the mobility similarity is calculated as:

$$S_n = \frac{S - S_{min}}{S_{max} - S_{min}}$$

Where,

$$S = \frac{\sum_{k}^{k+w} D(P(u_i,\ t_l), P\ (u_j, t_l)}{w}$$

where S represents mobility similarity score between users $u_i$ and $u_j$ within a time window w from time instance $t_k$,

function D computes the Euclidean distance between two positions, and
function P returns the position of a user for a given time instant.

8. The system as claimed in claim 5, wherein estimating the current location of each of the one or more existing users by the one or more LEMs comprises:

obtaining the CSI data from the one or more access points (APs) at a pre-determined location in a region;
extracting a plurality of received signal strength indicator (RSSI) values from the CSI data;

converting the plurality of RSSI values into a plurality of location coordinates based on the pre-determined location of the one or more APs; and pre-processing the plurality of location coordinates by discretizing followed by noise removal to obtain the current location of each of the one or more existing users.

9. One or more non-transitory machine-readable information storage mediums comprising one or more instructions which when executed by one or more hardware processors cause:

identifying one or more existing users connected to one or more access points (APs) in an environment under observation;
receiving a channel state information (CSI) data and one or more access point (AP) locations for each existing user from the one or more existing users connected to the one or more APs, wherein the CSI data comprises a time stamp, a signal strength, and a unique identifier (MacID);
estimating a current location of each of the one or more existing users in the environment under observation, by processing the CSI data and the one or more AP locations using one or more location estimation models (LEMs);
identifying a plurality of possible pairs of the one or more existing users in the environment under observation based on (a) the current location of each of the one or more existing users, and (b) a pre-defined threshold value of distance between the current location of the one or more existing users;
calculating a mobility similarity metric of each pair from the plurality of possible pairs of the one or more existing users;
obtaining plurality of clusters within the environment under observation by segregating the plurality of possible pairs of the one or more existing users based on (i) the mobility similarity metric of each pair, and (ii) the current location of each pair, wherein the plurality of possible pairs of the one or more existing users forming a cluster represents a similar location coordinate;
dynamically updating the plurality of clusters upon one or more new user entering the environment under observation, wherein the one or more new user is paired with at least one other user, wherein the at least one other user is one of (a) the one or more existing users, and (b) another new user, and wherein the dynamically updated clusters are segregated based on the mobility similarity metric and the current location; and
analyzing the plurality of dynamically updated clusters with respect to a floor plan of the environment under observation to identify one or more mobility trends of the one or more users within the environment under observation.

10. The one or more non-transitory machine-readable information storage mediums as claimed in claim 9, wherein the one or more mobility trends are identified by a software defined networking (SDN) plugin that is incorporated into one or more existing network management platforms that supports the SDN plugin, and one or more non-SDN network management platforms.

11. The one or more non-transitory machine-readable information storage mediums as claimed in claim 9, wherein the mobility similarity is a normalized value of a cumulative distance between two users in the environment under observation within a pre-defined time window, and wherein the mobility similarity is calculated as:

$$S_n = \frac{S - S_{min}}{S_{max} - S_{min}}$$

Where,

$$S = \frac{\sum_{k}^{k+w} D(P(u_i, \ t_l), P\ (u_j, t_l))}{w}$$

where S represents mobility similarity score between users $u_i$ and $u_j$ within a time window w from time instance $t_k$,

function D computes the Euclidean distance between two positions, and
function P returns the position of a user for a given time instant.

12. The one or more non-transitory machine-readable information storage mediums as claimed in claim 9, wherein estimating the current location of each of the one or more existing users by the one or more LEMs comprises:

obtaining the CSI data from the one or more access points (APs) at a pre-determined location in a region;
extracting a plurality of received signal strength indicator (RSSI) values from the CSI data;
converting the plurality of RSSI values into a plurality of location coordinates based on the pre-determined location of the one or more APs; and pre-processing the plurality of location coordinates by discretizing followed by noise removal to obtain the current location of each of the one or more existing users.

FIG. 1

**202**

**204**

**206**

| Waiting for incoming RSSI data | → | Convert RSSI data to location coordinates for all users | → | convert location coordinates to binary position matrix (discretization) |

**210**

**208**

| Similarity score increased | ← | compare score with previous score | ← | compute pair-wise user similarity score for a subset of users | ← | initialize with default hyperparameter values (E.g. window size) |

| Update hyperparameters | → | Similarity score decreased | → | Revert to last used hyperparameter value | → | compute score for all users and save in G |

**212**

| Positive patterns are returned to frontend | ← | G is periodically queried to determine patterns |

FIG. 2

16

300

identifying one or more existing users connected to one or more access points (APs) in an environment under observation

302

receiving a channel state information (CSI) data and one or more access point (AP) locations for each existing user from the one or more existing users connected to the one or more APs, wherein the CSI data comprises a time stamp, a signal strength, and a unique identifier (MAC ID)

304

estimating a current location of each of the one or more existing users in the environment under observation, by processing the CSI data and the one or more AP locations using one or more location estimation models (LEMs)

306

A

FIG.3A

(A)

identifying a plurality of possible pairs of the one or more existing users in the environment under observation based on (a) the current location of each of the one or more existing users, and (b) a pre-defined threshold value of distance between the current location of the one or more existing users

308

calculating a mobility similarity metric of each pair from the plurality of possible pairs of the one or more existing users

310

obtaining a plurality of clusters within the environment under observation by segregating the plurality of possible pairs of the one or more existing users based on (i) the mobility similarity metric of each pair, and (ii) the current location of each pair, wherein the plurality of possible pairs of the one or more existing users forming a cluster represents a similar location coordinate

312

(B)

**FIG. 3B**

B

dynamically updating the plurality of clusters upon one or more new user entering the environment under observation, wherein the one or more new user is paired with at least one other user, wherein the at least one other user is one of (a) the one or more existing users, and (b) another new user, and wherein the dynamically updated clusters are segregated based on the mobility similarity metric and the current location

314

analyzing the plurality of dynamically updated clusters with respect to a floor plan of the environment under observation to identify one or more mobility trends of the one or more users within the environment under observation

316

**FIG. 3C**

**402** FRONTEND
Group mobility
request from admin

Mobility pattern
response

**404** Database

Pulling
location
data

Database
request and
response

**406** CONTROLLER

Mobility trend
identification
model **110**

LEM

SENSE

Pulling CSI
data

**408** Message Bus

Pushing
location
data

Pulling
CSI data

Pushing CSI data to Database

FIG. 4

**410** AP₁  AP₂  AP₃  WLAN CONTROLLER
Network Infrastructure

$u_4$  $u_3$  $u_2$  $u_1$  Environment

**FIG. 5**

FIG. 6A

FIG. 6B

FIG. 6C

FIG. 6D

**FIG. 6E**

FIG. 7

# EUROPEAN SEARCH REPORT

**Application Number**

EP 25 21 7728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEN-GAL IRAD BENGAL@TAU AC IL ET AL: "Clustering Users by Their Mobility Behavioral Patterns", ACM TRANSACTIONS ON KNOWLEDGE DISCOVERY FROM DATA (TKDD), ASSOCIATION FOR COMPUTING MACHINERY, INC, US, vol. 13, no. 4, 20 August 2019 (2019-08-20), pages 1-28, XP058681019, ISSN: 1556-4681, DOI: 10.1145/3322126 * Section 1 INTRODUCTION; Section 3 PROPOSED APPROACH: LIFESTYLE-BASED CLUSTERING (LBC); Section 4.2.1 Proposed Entropy Clustering Measure * ----- | 1-12 | INV. H04W4/029 H04W4/33 |

**TECHNICAL FIELDS SEARCHED (IPC)**

H04W

The present search report has been drawn up for all claims

| Place of search | Date of completion of the search | Examiner |
|---|---|---|
| The Hague | 27 March 2026 | Fokas, Michail |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421096368